(19) Europäisches Patentamt / European Patent Office / Office européen des brevets

(11) **EP 4 755 628 A1**

## (12) EUROPEAN PATENT APPLICATION
published in accordance with Art. 153(4) EPC

(43) Date of publication:
**10.06.2026   Bulletin 2026/24**

(21) Application number: 24848889.2

(22) Date of filing: **12.07.2024**

(51) International Patent Classification (IPC):
**B32B 27/00** (2006.01)    **B32B 3/30** (2006.01)
**B32B 27/16** (2006.01)    **B32B 27/30** (2006.01)
**E04F 13/07** (2006.01)    **E04F 13/18** (2006.01)

(52) Cooperative Patent Classification (CPC):
**C08J 7/046; B32B 3/30; B32B 27/00; B32B 27/16;
B32B 27/30; E04F 13/07; E04F 13/18;**
B05D 3/0209; B05D 3/067; B05D 5/02

(86) International application number:
**PCT/JP2024/025339**

(87) International publication number:
**WO 2025/028233 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **02.08.2023   JP 2023126473**

(71) Applicant: **Toppan Holdings Inc.**
**Tokyo 110-0016 (JP)**

(72) Inventor: **YAMASAKI, Yoshimi**
**Tokyo 110-0016 (JP)**

(74) Representative: **TBK**
**Bavariaring 4-6**
**80336 München (DE)**

## (54) DECORATIVE SHEET

(57)    A decorative sheet 1 includes a primary film layer 2 and a surface protection layer 5 provided on one surface of the primary film layer 2. The surface protection layer 5 has a surface provided with an uneven structure having a plurality of ridged portions protruding in a ridged pattern. The surface protection layer 5 contains a cured product of an ionizing radiation-curable resin. The ionizing radiation-curable resin contains an ionizing radiation-curable resin with a cyclic structure.

FIG.1

EP 4 755 628 A1

**Description**

[Technical Field]

The present invention relates to decorative sheets. Decorative sheets can be used for, for example, surface decoration of building interiors and exteriors, fittings, furniture, construction materials, floor materials, and the like.

[Background Art]

As described in PTL 1, a large number of decorative sheets based on olefin resin (e.g., polypropylene sheets) have recently been proposed as alternative decorative sheets to decorative sheets made of polyvinyl chloride, which raise concerns in terms of environmental protection. These proposed decorative sheets, which are free of vinyl chloride resin, produce less toxic gas when incinerated.

In order to impart design quality and durability to the surface of buildings, decorative sheets are widely used to form decorative boards by bonding the decorative sheets to the surfaces of materials such as timber, wood-based boards, metal plates, non-combustible boards, paper substrates, or resin substrates, typically using adhesives or similar agents. To provide design quality, designs are selected depending on requirements and applications, ranging from wood-grain or stone-grain patterns formed by various printing methods to a plain surface without a pattern. Similarly, the gloss of a surface is also an important aspect of design quality, and glosses ranging from a high, mirror-like gloss to low gloss causing no reflection are selected depending on requirements and applications. Along with design quality, durability is an important feature of decorative sheets. Durability is determined by an overall evaluation of scratch resistance, contamination resistance, and whether they are maintained over a long period of time. Decorative sheets are used for interior decoration materials of housings and public facilities, exterior decoration materials for front doors or the like, surface materials for fixtures, and surface materials for home appliances. As such, the decorative sheets may be exposed to direct sunlight, wind, or rain on a daily basis and need high weatherability.

Durability is typically imparted by forming a surface protection layer on the outermost surface of the decorative sheet. In order to adjust the above-mentioned gloss, in particular, to achieve low gloss, a gloss adjuster (matting additive) is typically added to the surface protection layer. Such decorative sheets obtained in consideration of design qualities (low gloss), scratch resistance, and contamination resistance include, for example, a decorative sheet described in PTL 2.

PTLs 3 to 7 each describe a method for producing a low-gloss decorative sheet by forming wrinkles using excimer light with a wavelength shorter than 200 nm.

[Citation List]

[Patent Literature]

PTL 1: JP 3271022 B

PTL 2: JP 2019-119138 A

PTL 3: WO 2021/201105

PTL 4: JP 2022-008024 A

PTL 5: WO 2022/054644

PTL 6: WO 2022/054645

PTL 7: WO 2022/054646

[Summary of the Invention]

[Technical Problem]

The growing use of decorative boards with decorative sheets and increasing customer awareness of quality have recently led to greater demand for decorative sheets featuring low gloss and various properties such as fingerprint resistance, scratch resistance, contamination resistance, and bendability. From the perspective of contamination resistance, stain resistance against stains containing strong coloring components is needed in wet areas (such as kitchens and bathroom sinks). For example, around bathroom sinks, hair dye is often used for coloring hair. Such hair dye is a mixed solution of a first agent containing dye and alkali and a second agent containing an oxidizing agent. As such, if hair dye adheres to a decorative sheet and remains unnoticed for some time, the hair dye may react with the topcoat resin of the decorative sheet and result in severe staining. It is thus desirable for decorative sheets to have stain resistance.

An object of the present invention is to provide a decorative sheet with low gloss and high stain resistance.

[Solution to Problem]

An aspect of the present invention provides a decorative sheet including: a primary film layer; and a surface protection layer provided on one surface of the primary film layer, in which the surface protection layer has a surface provided with an uneven structure having a plurality of ridged portions protruding in a ridged pattern, the surface protection layer contains a cured product of an ionizing radiation-curable resin, and the ionizing radiation-curable resin contains an ionizing radiation-curable resin with a cyclic structure.

Another aspect of the present invention provides the decorative sheet according to the above aspect, in which the ionizing radiation-curable resin contains the ionizing radiation-curable resin with a cyclic structure, the cyclic structure accounting for 2 to 45% by mass of the entire ionizing radiation-curable resin.

Still another aspect of the present invention provides the decorative sheet according to any one of the above aspects, in which the cyclic structure is composed of a hydrocarbon having one to four rings.

Still another aspect of the present invention provides the decorative sheet according to any one of the above aspects, in which the ionizing radiation-curable resin with a cyclic structure is an acrylate.

Still another aspect of the present invention provides the decorative sheet according to any one of the above aspects, in which the ionizing radiation-curable resin with a cyclic structure is monofunctional.

Still another aspect of the present invention provides the decorative sheet according to any one of the above aspects, in which the ionizing radiation-curable resin further contains an oligomer having ten or less functional groups.

Still another aspect of the present invention provides the decorative sheet according to any one of the above aspects, in which the oligomer is a urethane acrylate or acrylic acrylate.

Still another aspect of the present invention provides the decorative sheet according to any one of the above aspects, in which the uneven structure of the surface protection layer has RSm/Ra within the range of 10 to 600.

Still another aspect of the present invention provides the decorative sheet according to any one of the above aspects, in which the surface protection layer has a thickness within the range of 2 to 20 μm.

Still another aspect of the present invention provides the decorative sheet according to any one of the above aspects, in which the surface protection layer further contains particles having an average particle size of 10 μm or less.

Still another aspect of the present invention provides the decorative sheet according to any one of the above aspects, in which the particles are contained in the surface protection layer in an amount within the range of 0.5 to 10 parts by mass relative to 100 parts by mass of the entire ionizing radiation-curable resin.

Still another aspect of the present invention provides the decorative sheet according to any one of the above aspects, in which the surface protection layer has a gloss level smaller than or equal to 10.

Still another aspect of the present invention provides a decorative material including: the decorative sheet according to any one of the above aspects; and a substrate to which the decorative sheet is bonded.

Still another aspect of the present invention provides a method for producing a decorative sheet, the method including: coating one surface of a primary film layer with a coating film made from a surface protection layer coating solution; irradiating the coating film with light having a wavelength of 200 nm or less; and after the irradiation, irradiating with ionizing radiation or with ultraviolet light having a wavelength longer than the light, in which the surface protection layer coating solution contains an ionizing radiation-curable resin, and the ionizing radiation-curable resin contains an ionizing radiation-curable resin with a cyclic structure.

Still another aspect of the present invention provides the method according to the above aspect, in which the light has a wavelength of 172 nm.

[Advantageous Effects of the Invention]

The present invention enables a decorative sheet with low gloss and high stain resistance to be provided.

[Brief Description of the Drawings]

Fig. 1 is a cross-sectional view of a decorative material including a decorative sheet according to an embodiment of the present invention.

Fig. 2 is a cross-sectional view of a decorative material including a decorative sheet according to another embodiment of the present invention.

Fig. 3 is a cross-sectional view of a surface protection layer included in the decorative sheets in Figs. 1 and 2.

Fig. 4 is a microscope image of the surface protection layer of a decorative sheet according to an example of the present invention.

[Description of the Embodiments]

Hereinafter, the configuration of a decorative sheet according to an embodiment of the present invention is described with reference to the drawings. The embodiments described below are specific versions of any of the above aspects. The items described below may be incorporated into each of the above aspects singly or in combination.
In the drawings referred to below, elements having like or similar functions are designated by the same reference numerals and not described redundantly. The drawings are schematic, and the relationship between the thickness and the plan dimensions, the ratio in thickness between layers, and the like may be different from actual ones.
The embodiments described below are examples for embodying the technical idea of the present invention, and the technical idea of the present invention should not be construed as limiting the materials, the shapes, and the structures of components to those described later. The technical idea of the present invention can be modified variously within the technical scope defined by the claims.

<1> Decorative Material and Decorative Sheet

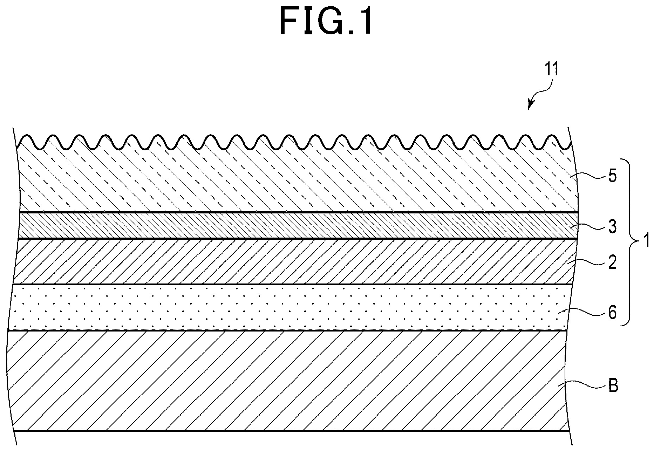

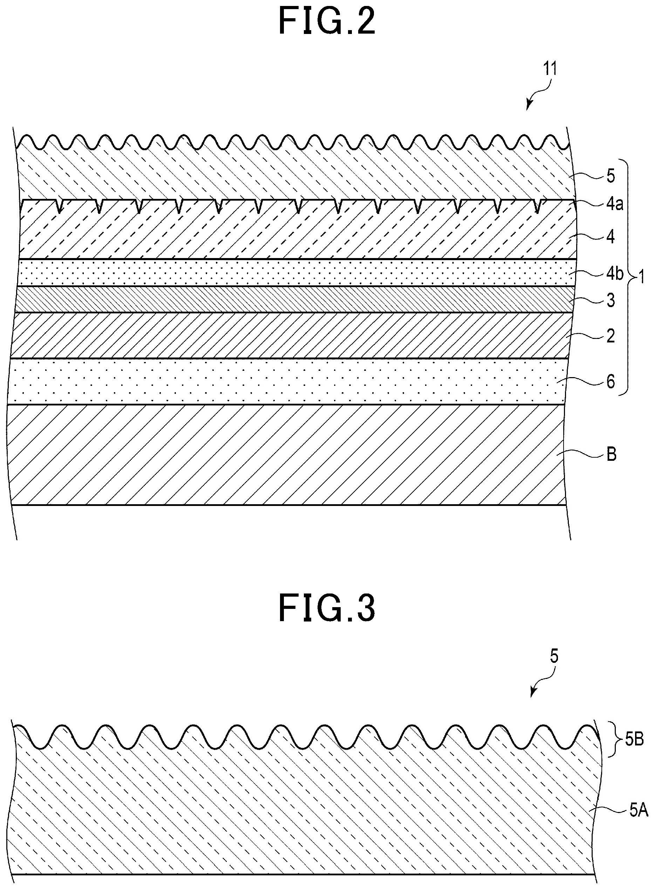

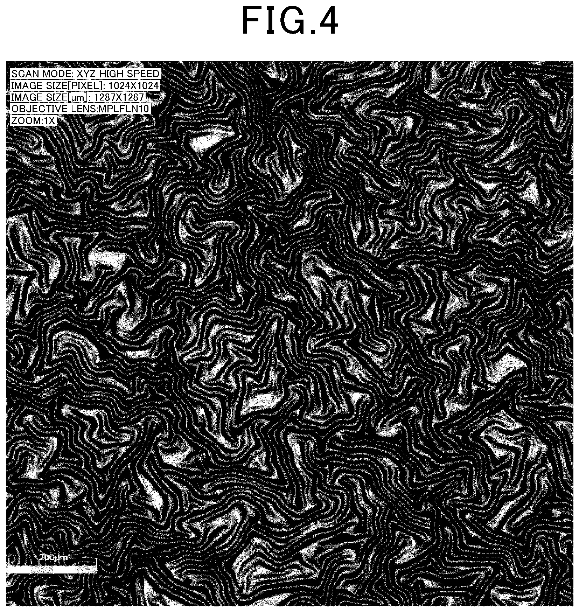

Fig. 1 is a cross-sectional view of a decorative material including a decorative sheet according to an embodiment of the present invention. Fig. 2 is a cross-sectional view of a decorative material including a decorative sheet according to another embodiment of the present invention. Fig. 3 is a cross-sectional view of a surface protection layer included in the decorative sheets in Figs. 1 and 2. Fig. 4 is a micrograph of the surface protection layer of a decorative sheet according to an example of the present invention.
The cross section illustrated in Fig. 3 is taken along the thickness direction of the surface protection layer. The micrograph in Fig. 4 is a plan view photograph obtained with a laser microscope (OLS-4000 manufactured by Olympus Corporation).
Figs. 1 and 2 each illustrate a decorative material 11 including a substrate B and a decorative sheet 1 bonded thereto. Herein, the decorative material 11 is a decorative plate. The decorative plate may be flat, bent, or folded. The decorative material 11 may have a shape other than a plate.
The substrate B here is a plate material. The plate material is, for example, a wooden board, an inorganic board, a metal plate, or a composite plate made from a plurality of materials. The substrate B may have a shape other than a plate.
In the decorative sheet 1 illustrated in Fig. 1, a pattern layer 3 and a surface protection layer 5 are stacked in this order on the front surface of a primary film layer 2, which is one of its surfaces, from the primary film layer 2, and a primer layer 6 is stacked on the opposite surface of the primary film layer 2 (i.e., the surface facing the substrate B). In Fig. 1, one or more of the pattern layer 3 and the primer layer 6 may be omitted.
In the decorative sheet 1 illustrated in Fig. 2, a pattern layer 3, an adhesive resin layer 4b, a transparent resin layer 4, and a surface protection layer 5 are stacked in this order on the front surface of a primary film layer 2, which is one of its surfaces, from the primary film layer 2, and a primer layer 6 is stacked on the opposite surface of the primary film layer 2 (i.e., the surface facing the substrate B). The transparent resin layer 4 has a raised and recessed pattern (an embossed pattern 4a) imparted by embossing. In Fig. 2, one or more of the pattern layer 3, the adhesive resin layer 4b, the transparent resin layer 4, and the primer layer 6 may be omitted. The embossed pattern 4a may not necessarily be imparted.
Furthermore, to meet requirements such as scratch resistance, at least one of the transparent resin layer 4 and the surface protection layer 5 may be stacked in multiple layers. In consideration of interlayer adhesion, other known layers may be disposed. Additionally, a concealing layer (not shown) or a similar layer may be disposed as appropriate between the primary film layer 2 and the primer layer 6.
Each of the layers included in the decorative sheet 1 will now be described.

<1.1> Primary Film Layer

The primary film layer 2 may be any material selected from, for example, paper, a synthetic resin, a foam of a synthetic resin, rubber, nonwoven fabric, synthetic paper, or a metallic foil. Examples of the paper include tissue paper, titanium paper, and resin-impregnated paper. Examples of the synthetic resin include polyethylene, polypropylene, polybutylene, polystyrene, polycarbonate, polyester, polyamide, ethylene-vinyl acetate copolymer, polyvinyl alcohol, and acrylic. Examples of the rubber include ethylene-propylene copolymer rubber, ethylene-propylene-diene copolymer rubber, styrene-butadiene copolymer rubber, styrene-isoprene-styrene block copolymer rubber, styrene-butadiene-styrene block copolymer rubber, and polyurethane. As the nonwoven fabric, organic or inorganic nonwoven fabric may be used. Examples of the metal of the metal foil include aluminum, iron, gold, and silver. The primary film layer 2 may also be a sheet made of the same resin composition as the transparent resin layer 4. In this case, the primary film layer 2 is obtained by forming a resin material or a resin composition into a film. Examples of the forming methods include calendering and extrusion.

It is desirable for the primary film layer 2 to have a color layer formed by mixing an inorganic pigment into a synthetic resin and a skin layer formed of a synthetic resin. The thickness of the skin layer is preferably 3 $\mu$m or more and 20 $\mu$m or less, and the thickness ratio between the skin layer and the color layer is preferably 1:6 to 1:50. If the primary film layer 2 is formed by coextrusion and the color layer is the outermost layer, the pigment components contained in the color layer may bleed, contaminating the T-die of the extruder or the roll during conveyance. It is thus desirable for the outermost layer to be the skin layer, which contains no pigment. It is desirable to provide skin layers on both sides of the color layer. It is not preferable to increase the thickness of the skin layer to raise its proportion relative to the color layer because the resultant reduction in the proportion of the color layer lowers the opacity.

The thickness of the primary film layer 2 is preferably 50 $\mu$m or more and 150 $\mu$m or less. When the thickness of the primary film layer 2 is less than 50 $\mu$m, the ability to cover the irregularities of the substrate (leveling property) decreases. In contrast, when the thickness of the primary film layer 2 is more than 150 $\mu$m, bending may cause a defect such as whitening or cracking.

(Inorganic Pigment)

The inorganic pigment may be a known inorganic pigment such as titanium oxide used to impart opacity. The primary film layer 2 serves to hide the pattern on the substrate B. To achieve the opacity needed in view of the design quality of the decorative sheet 1, the light transmittance is preferably 40% or less. Low opacity is not preferable because the pattern of the pattern layer 3 and the pattern of the substrate B may blend together. The contained inorganic pigment can achieve the decorative sheet 1 with high opacity. The inorganic pigment content is preferably 5 parts by mass or more and 50 parts by mass or less with respect to 100 parts by mass of the resin material. A low inorganic pigment content may result in poor opacity, whereas a content higher than or equal to 50 parts by mass is not preferable because the primary film layer 2 becomes brittle. Examples of inorganic pigments to be contained include, but are not limited to, natural inorganic pigments and synthetic inorganic pigments. Examples of natural inorganic pigments include earth pigments, calcined earth pigments, and mineral pigments. Examples of synthetic inorganic pigments include oxide pigments, hydroxide pigments, sulfide pigments, silicate pigments, phosphate pigments, carbonate pigments, metal powder pigments, and carbon pigments. The synthetic inorganic pigments may include a mixed pigment obtained by mixing one or more of the natural inorganic pigments and the synthetic inorganic pigments. The synthetic inorganic pigments may be used together with organic pigments, such as carbon black.

Furthermore, the inorganic pigment may additionally contain an additive such as a metal salt of a fatty acid in order to improve dispersibility and extrudability.

When the primary film layer 2 is a substrate with inert surfaces, such as an olefin-based material, it is desirable to subject both sides of the primary film layer 2 to corona treatment, plasma treatment, ozone treatment, electron beam treatment, ultraviolet treatment, dichromate treatment, or other treatment.

<1.2> Pattern Layer

The pattern layer 3 for adding a design pattern to the decorative sheet 1 may be provided on the front surface of the primary film layer 2. Examples of the design pattern include wood grain patterns, stone grain patterns, sand patterns, tiled patterns, brick patterns, fabric patterns, leather grain patterns, and geometric patterns.

In addition, a solid background ink layer (not shown) may be disposed between the primary film layer 2 and the pattern layer 3 depending on the intended design. The solid background ink layer is disposed so as to cover the entire primary film layer 2. The solid background ink layer may have a multilayer structure with two or more layers as appropriate for opacity and other needs. Furthermore, the pattern layer 3 may be formed by stacking layers corresponding to the number of separations needed to express the desired design. In this manner, the combination of the pattern layer 3 and the solid background ink layer may vary widely depending on the desired design, that is, the design to be expressed, and is not limited to particular configurations.

The constituent materials of the solid background ink layer and the pattern layer 3 are not limited to particular types. Examples of the constituent materials of the solid background ink layer and the pattern layer 3 include a coating agent and printing ink obtained by dissolving and dispersing a matrix and a colorant, such as a dye or a pigment, in a solvent. Examples of the matrix include various synthetic resins, such as oily nitrocellulose resin, two-component urethane resin, acrylic-based resin, styrene-based resin, polyester-based resin, urethane-based resin, polyvinyl-based resin, alkyd resin, epoxy-based resin, melamine-based resin, fluororesin, silicone-based resin, and rubber-based resin, as well as mixtures and copolymers thereof. Furthermore, examples of the colorant include inorganic pigments, such as carbon black, titanium white, zinc white, red iron oxide, chrome yellow, Prussian blue, and cadmium red; organic pigments, such as azo pigments, lake pigments, anthraquinone pigments, phthalocyanine pigments, isoindolinone pigments, and dioxazine pigments; and mixtures thereof. Moreover, examples of the solvent include toluene, xylene, ethyl acetate, butyl acetate, methyl alcohol, ethyl alcohol, isopropyl alcohol, acetone, methyl ethyl ketone, methyl isobutyl ketone, cyclohexanone, water, and mixtures thereof.

In order to impart various functions, the solid background ink layer and the pattern layer 3 may further contain functional additives, such as an extender pigment, a plasticizer, a dispersant, a surfactant, a tackifier, an adhesive aid, a drying agent, a curing agent, a curing accelerator, and a curing retarder.

Here, the solid background ink layer and the pattern layer 3 can be formed by various printing methods such as a gravure printing method, an offset printing method, a screen printing method, an electrostatic printing method, and an ink-jet printing method. Since covering the entire surface of the primary film layer 2, the solid background ink layer may also be formed by various coating methods such as roll coating, knife coating, microgravure coating, and die coating. For each of the layers to be formed, the corresponding method may be selected from these printing methods and coating methods. However, it is efficient to select the same method and process all layers collectively.

The thickness of the pattern layer 3 is preferably 3 $\mu$m or more and 20 $\mu$m or less. The pattern layer 3 that has a thickness within this range enables clear printing, improves printing efficiency during the production of the decorative sheet 1, and contributes to a reduction in manufacturing costs.

<1.3> Transparent Resin Layer

The resin material used as the main component of the transparent resin layer 4 is preferably made of olefin-based resin. Examples of the material include polypropylene, polyethylene, polybutene, and a homopolymer or a copolymer of two or more $\alpha$-olefins (e.g., propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, etc.) as well as a copolymer of ethylene or an $\alpha$-olefin with another monomer, such as an ethylene-vinyl acetate copolymer, ethylene-vinyl alcohol copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, or ethylene-butyl acrylate copolymer. In order to improve the surface strength of the decorative sheet 1, highly crystalline polypropylene is preferably used.

Unless otherwise specified, the main component used herein refers to a component that constitutes 90% by mass or more of the material in question.

When the transparent resin layer 4 is provided, the thickness of the transparent resin layer 4 is preferably 50 $\mu$m or more and 100 $\mu$m or less. When the thickness is less than 50 $\mu$m, the effect of improving the surface scratch resistance of the transparent resin layer 4 decreases, reducing the significance of providing the transparent resin layer 4. When the thickness of the transparent resin layer 4 is more than 100 $\mu$m, bending may cause defects such as whitening or cracking due to the excessively high rigidity of the decorative sheet 1.

However, when the surface protection layer 5 is provided on the transparent resin layer 4, the thickness of the transparent resin layer 4 may be less than 50 $\mu$m.

The resin composition constituting the transparent resin layer 4 may also contain various functional additives such as thermal stabilizer, light stabilizer, ultraviolet absorber, antiblocking agent, catalyst scavenger, colorant, light scattering agent, and gloss adjuster, as appropriate. These various functional additives can be selected as appropriate from well-known additives.

The adhesive used to bond the pattern layer 3 and the transparent resin layer 4 together can be selected from any materials depending on the bonding method. Examples of the bonding method include lamination methods using thermal lamination, extrusion lamination, dry lamination, and other lamination. The adhesive can be selected from, for example, acrylic, polyester-based, and polyurethane-based materials. Typically, two-component urethane materials utilizing the reaction between isocyanates and polyols are desirable because of the cohesive force of the materials. Although the lamination method for the transparent resin layer 4 is not limited to a particular method, methods utilizing thermal compression, extrusion lamination, dry lamination, and other lamination methods are typically used.

The transparent resin layer 4 may also have a raised and recessed pattern (the embossed pattern 4a) imparted by embossing. The embossed pattern 4a can also be filled with ink to further improve the design quality. The embossed pattern 4a may be formed by a method for first laminating a sheet in any way and then embossing the laminated sheet by thermal pressing, and a method for embossing simultaneously with extrusion lamination by means of a cooling roll provided with a raised and recessed pattern.

Other usable methods include bonding the pattern layer 3 embossed simultaneously with extrusion and the transparent resin layer 4 together by heat or dry lamination.

In order to enhance the adhesion between the pattern layer 3 and the transparent resin layer 4, the adhesive resin layer 4b may be disposed between the pattern layer 3 and the transparent resin layer 4. Specifically, the adhesive resin layer 4b may be disposed between the transparent resin layer 4 and the adhesive in order to achieve higher laminate strength by extrusion lamination. When the adhesive resin layer 4b is provided, lamination can be performed through coextrusion of the transparent resin layer 4 and the adhesive resin layer 4b. The adhesive resin layer 4b can be obtained by acid-modifying polypropylene, polyethylene, acrylic resins, or the like. It is desirable for the adhesive resin layer 4b to have a thickness of 2 $\mu$m or more in order to improve the adhesiveness.

When the transparent resin layer 4 is provided with the embossed pattern 4a, the uneven structure can be expressed by the section height difference Rdc. The section height difference Rdc is a surface texture parameter defined in JIS B 0601-2013. The section height difference Rdc indicates a section height difference in a roughness curve, representing the steepness of the uneven shape. Herein, the position of the highest peak of the roughness curve is defined as the reference level of the section height level c. Herein, c (Rmr1) refers to the section height level at which the material ratio Rmr for the roughness curve is 10%, and c (Rmr2) refers to the section height level at which the material ratio Rmr for the roughness curve is 25%. The section height difference Rdc ($\mu$m) in the roughness curve is the difference between the section height level c (Rmr1) and the section height level c (Rmr2).

It is desirable for the Rdc of the transparent resin layer 4 to be 0.2 $\mu$m or more and 2.9 $\mu$m or less. When the Rdc is less than 0.2 $\mu$m, the effects of embedding ink tend to decline. When the Rdc is more than 2.9 $\mu$m, the surface protection layer 5 formed on the transparent resin layer 4 tends to exhibit a coarse and rough feel rather than a moist feel. The Rdc of the transparent resin layer 4 is preferably 0.2 $\mu$m or more and 1.0 $\mu$m or less.

<1.4> Surface Protection Layer

As illustrated in Fig. 3, the surface protection layer 5 includes a core portion 5A and a ridged portion 5B protruding in a ridged pattern from one surface of the core portion 5A. The surface protection layer 5 thus has an uneven shape. In the decorative sheet 1 according to the present embodiment, the "ridged pattern" refers to a pattern of narrow and long protrusions that linearly continue in plan view. The ridged portion 5B may be curved or linear in plan view, but is preferably curved from the viewpoint of fingerprint resistance of the decorative sheet 1. In the present embodiment, the ridged portion 5B refers to, for example, a part from the lowest part to the highest part of the uneven shape of the surface protection layer 5, and the core portion 5A refers to the portion excluding the ridged portions 5B of the surface protection layer 5. The cross-sectional shape of the ridged portion 5B in the thickness direction of the surface protection layer 5 may be a sinusoidal shape. The sinusoidal shape refers to a shape in which the line from a lowest position to a highest position of the ridged portion 5B can be expressed by a sinusoidal wave.

Fig. 3 is a cross-sectional view schematically illustrating a cross-section (a cross-section in the thickness direction of the surface protection layer 5) of the ridged portion 5B in the surface protection layer 5, and Fig. 4 is a plan view photograph showing the surface structure of the surface protection layer 5. Fig. 4 is a plan view photograph obtained with a laser microscope (OLS-4000 manufactured by Olympus Corporation).

As shown in the plan view photograph of Fig. 4, the ridged portion 5B is in the shape of narrow and long protrusions that linearly continue in plan view. As described later, the ridged portion 5B is formed by irradiating the surface of an ionizing radiation-curable resin with light having a certain wavelength to buckle the curable film of the ionizing radiation-curable resin.

Such a shape of the ridged portion 5B can be represented by a ratio RSm/Ra between a transverse (the planar direction of the surface protection layer 5, which is the horizontal direction in Fig. 3) surface roughness index RSm ($\mu$m) and a height (the depth direction of the ridged portion 5B, i.e., the thickness direction of the surface protection layer 5, which is the vertical direction in Fig. 3) surface roughness index Ra ($\mu$m). The ratio RSm/Ra is preferably within the range of 10 to 600, more preferably within the range of 10 to 400, and still more preferably within the range of 10 to 300. RSm/Ra is yet still more preferably within the range of 10 to 250. As the ratio RSm/Ra decreases, the shape of the ridged portion 5B becomes finer. As a result, dirt becomes more difficult to remove, and the contamination resistance tends to decline. When the ratio RSm/Ra increases, the gloss level tends to rise due to the widening gaps between the ridges. Here, Ra and RSm, which are indicators of surface roughness, are measurement values determined using a surface profilometer, or measurement values determined in conformity with JIS B 0601.

The surface protection layer 5 has a thickness t preferably within the range of 2 to 20 $\mu$m. The thickness t of the surface protection layer 5 is more preferably within the range of 5 to 20 $\mu$m. When the thickness t of the surface protection layer 5 is less than 2 μm, vacuum-ultraviolet light cannot deeply shape the layer, making it difficult to achieve a low gloss. When the thickness t of the surface protection layer 5 is more than 20 μm, the workability decreases, and thus bending tends to cause whitening.

The thickness of the surface protection layer 5 is the thickness of a layer that is equal in apparent area and volume to the surface protection layer 5 and has a flat surface. The thickness of the surface protection layer 5 is determined by, for example, the following method. First, a cross section parallel to the thickness direction of the surface protection layer 5 and perpendicular to the longitudinal direction of the ridged portions 5B is imaged. Next, from this cross-sectional image, the dimension of the surface protection layer 5 in the width direction of the ridged portions 5B and the area of the cross section of the surface protection layer 5 are determined. The thickness of the surface protection layer 5 is a value obtained by dividing the area by the above dimension. The thickness of the surface protection layer 5 is determined by observing a cross section with a scanning electron microscope and averaging 25 points. Specifically, the thickness of the surface protection layer 5 can be determined as described in Examples later. When the surface protection layer coating solution described later contains no solvent, the coating film made from the surface protection layer coating solution has the same thickness as the thickness of the surface protection layer 5.

Here, the surface protection layer 5 can be formed by various printing methods such as a gravure printing method, an offset printing method, a screen printing method, an electrostatic printing method, and an ink-jet printing method. Alternatively, because the surface protection layer 5 covers the entire surface on the front-surface side of the primary film layer 2, the surface protection layer 5 can be formed by various coating methods such as roll coating, knife coating, micro gravure coating, and die coating. For each of the layers to be formed, the corresponding method may be selected from these printing methods and coating methods or the same method may be selected to process all layers collectively.

From the viewpoint of design quality, the pattern layer 3 and the surface protection layer 5 may be matched. For matching, the surface protection layer 5 needs to be collectively formed after the formation of the pattern layer 3 and therefore a gravure printing method is preferably used. In addition, the gravure printing method enables comparatively high-speed printing and therefore is advantageous and preferable also in terms of costs. Here, matching means that 50% or more, preferably 70% or more, most preferably 90% or more of the part in which the surface protection layer 5 is formed overlap the pattern part of the pattern layer 3 in plan view.

In order to adjust the layer thickness of the surface protection layer 5, the application amount may be adjusted in the printing and coating methods described above. The application amount can be obtained by producing a product including the surface protection layer 5 formed on the base sheet (including the primary film layer) by any of various printing and coating methods, and a product without the surface protection layer 5, and then calculating the difference in mass therebetween.

The surface protection layer 5 contains a cured product of an ionizing radiation-curable resin. The surface protection layer 5 preferably contains an ionizing radiation-curable resin as a main material. The main material refers to a material contained in an amount of 60 parts by mass or more, more preferably 70 parts by mass or more, and most preferably 80 parts by mass or more, relative to 100 parts by mass of the surface protection layer 5. The ionizing radiation here refers to a charged particle beam such as an electron beam. The ionizing radiation-curable resin is cured by irradiation with ionizing radiation. The ionizing radiation-curable resin may also be cured by irradiation with ultraviolet light. The ionizing radiation-curable resin used herein is cured by irradiation with light with a wavelength of 200 nm or less and also has a high absorption coefficient for this light. As the ionizing radiation-curable resin forming the surface protection layer 5, known resins such as various monomers and commercially available oligomers can be used, and examples of known resins that can be used include (meth)acrylic resins, silicone-based resins, polyester-based resins, urethane-based resins, amide-based resins, and epoxy-based resins. The ionizing radiation-curable resin may be either an aqueous resin or a non-aqueous (organic solvent-based) resin and used singly or in any combination of two or more.

The ionizing radiation-curable resin contains an ionizing radiation-curable resin with a cyclic structure. The ionizing radiation-curable resin preferably contains an ionizing radiation-curable resin with a cyclic structure so that the cyclic structure accounts for 2 to 45% by mass of the entire ionizing radiation-curable resin. The ionizing radiation-curable resin more preferably contains an ionizing radiation-curable resin with a cyclic structure so that the cyclic structure accounts for 5 to 45% by mass of the entire ionizing radiation-curable resin. The ionizing radiation-curable resin containing an ionizing radiation-curable resin with a cyclic structure (hereinafter also referred to as a cyclic compound) can provide a decorative sheet with high stain resistance. The effect seems to be due to the following reasons.

As described hereinafter, the surface protection layer 5 is formed by a first irradiation step and a second irradiation step. In the first irradiation step, the ionizing radiation-curable resin undergoes cross-linking reaction only in the surface of the coating film, and in the second irradiation step, the entire coating film cures. The first irradiation step is typically performed under a nitrogen gas atmosphere with a low oxygen concentration. The nitrogen gas atmosphere with a low oxygen concentration is a hydrophobic atmosphere. In the cyclic compound contained in the coating film, the cyclic structure part is hydrophobic. The cyclic structure part of the cyclic compound is thus likely to be exposed on the surface of the coating film. As a result, more of the cyclic structure part of the cyclic compound is present on the surface of the surface protection layer 5 than in the regions other than the surface. The cyclic structure part of the cyclic compound is bulky, thus preventing dye molecules in hair dye adhered to the surface protection layer 5 from coming into contact with the ionizing radiation-curable resin containing no cyclic structure. Accordingly, the ionizing radiation-curable resin with a cyclic structure seems to exhibit high stain resistance against hair dye.

If the amount of the cyclic structure part is too small relative to the entire ionizing radiation-curable resin, the stain resistance performance cannot be sufficiently exhibited. In contrast, if the amount of the cyclic structure part is too large relative to the entire ionizing radiation-curable resin, the crosslink density decreases, making it difficult to sufficiently prevent staining by the dye molecules in the hair dye. In addition, if the amount of the cyclic structure part is too large relative to the entire ionizing radiation-curable resin, wrinkling is insufficient, and the gloss level tends to increase.

The proportion of the cyclic structure part in the entire ionizing radiation-curable resin, Rc (% by mass), can be determined from the following equation:

$$Rc = (Mc/Mr) \times Rr$$

Mc: the molecular weight of "the cyclic structure part"

Mr: the molecular weight of "the ionizing radiation-curable resin with a cyclic structure"

Rr: the proportion (% by mass) of "the ionizing radiation-curable resin with a cyclic structure" in the entire ionizing radiation-curable resin

The term "cyclic structure" refers to a cyclic structure based on a carbon skeleton. The ring atoms in the cyclic structure may include only carbon (i.e., a carbon ring) or both carbon and heteroatoms (i.e., a heterocycle). The cyclic structure may be monocyclic or polycyclic. The polycyclic ring may be a fused ring, a spiro ring, or a bridged ring. The cyclic structure may be composed of, for example, a hydrocarbon having one to four rings. That is, the cyclic structure may be composed of, for example, a monocyclic hydrocarbon or a hydrocarbon having two to four rings. In the cyclic structure, the number of ring atoms is, for example, 5 or more, preferably 5 to 18, more preferably 6 to 18, and still more preferably 6 to 10.

Examples of the cyclic structure include isobornyl, adamantyl, dicyclopentanyl, cyclohexyl, cyclopentyl, cyclopentadienyl, 3,4-epoxycyclohexyl, 6,7-epoxydecahydro-1,4:5,8-dimethanonaphthalen, decahydronaphthalene, tricyclodecane, benzyl, and phenyl groups. Isobornyl, adamantyl, dicyclopentanyl, 6,7-epoxydecahydro-1,4:5,8-dimethanonaphthalen, and tricyclodecane groups correspond to bridged rings and have particularly bulky structures.

The ionizing radiation-curable resin with a cyclic structure may contain a substituent in the cyclic structure or may not contain a substituent in the cyclic structure. When the ionizing radiation-curable resin with a cyclic structure contains a substituent in the cyclic structure, the term "cyclic structure" refers to the ring part excluding the substituent. When the ionizing radiation-curable resin with a cyclic structure contains a bulky substituent such as a tert-butyl group in the cyclic structure, the bulky substituent part as well as the cyclic structure may serve to prevent dye molecules in hair dye adhered to the surface protection layer 5 from coming into contact with the ionizing radiation-curable resin containing no cyclic structure.

The ionizing radiation-curable resin with a cyclic structure is preferably an acrylate. Examples of the ionizing radiation-curable resin with a cyclic structure include cyclohexyl (meth)acrylate, 3,3,5-trimethylcyclohexyl (meth)acrylate, 4-tert-butylcyclohexyl (meth)acrylate, cyclopentyl (meth)acrylate, dicyclopentanyl (meth)acrylate, 3,4-epoxycyclohexylmethyl acrylate, 6,7-epoxydecahydro-1,4:5,8-dimethanonaphthalen-2-yl acrylate, tricyclodecane dimethanol diacrylate, isobornyl (meth)acrylate, 2-adamantyl prop-2-enoate (i.e., 2-adamantyl acrylate), 1-adamantyl (meth)acrylate, 3-hydroxy-1-adamantyl (meth)acrylate, 2-methyl-2-adamantyl (meth)acrylate, 2-ethyl-2-adamantyl (meth)acrylate, 2-isopropyl-2-adamantyl (meth)acrylate, 1,3-adamantanediol di(meth)acrylate, benzyl (meth)acrylate, and phenoxy ethyl(meth)acrylate. The term "(meth)acrylate" here is used to mean acrylate, methacrylate, and a combination thereof. These "ionizing radiation-curable resins with a cyclic structure" may be used singly or in any combination of two or more.

The ionizing radiation-curable resin with a cyclic structure is, for example, monofunctional or bifunctional. The ionizing radiation-curable resin with a cyclic structure is preferably monofunctional. The monofunctional ionizing radiation-curable resin with a cyclic structure can provide a surface protection layer having a better surface condition, that is, a surface protection layer with wrinkles formed more uniformly in its surface.

The ionizing radiation-curable resin preferably contains an ionizing radiation-curable resin with a cyclic structure in a proportion ranging from 10 to 85% by mass. The ionizing radiation-curable resin more preferably contains an ionizing radiation-curable resin with a cyclic structure in a proportion ranging from 10 to 80% by mass, and still more preferably 30 to 60% by mass.

The ionizing radiation-curable resin preferably further contains an oligomer having ten or less functional groups. Such an oligomer is preferably a urethane acrylate or acrylic acrylate. The oligomer preferably has two or more and ten or less functional groups. The oligomer preferably contains no cyclic structure. That is, the oligomer is preferably acyclic acrylate. When the surface protection layer contains an oligomer, the surface protection layer can have higher formability. An oligomer having a smaller number of functional groups is preferable because of its ability to achieve a low gloss level.

Examples of the oligomer include EBECRYL 9270 (bifunctional urethane acrylate) (Daicel-Allnex Ltd.), EBECRYL 4666 (tetrafunctional urethane acrylate) (Daicel-Allnex Ltd.), EBECRYL 5129 (hexafunctional urethane acrylate) (Daicel-Allnex Ltd.), UN-904 (decafunctional urethane acrylate) (Negami Chemical Industrial Co., Ltd.), and OAP-5000 (acrylic acrylate) (Negami Chemical Industrial Co., Ltd.). The oligomers may be used singly or in any combination of two or more.

The ionizing radiation-curable resin preferably contains the oligomer in a proportion ranging from 20 to 70% by mass. The ionizing radiation-curable resin more preferably contains the oligomer in a proportion ranging from 25 to 60% by mass, and still more preferably 30 to 50% by mass.

The oligomer is contained in the surface protection layer in an amount ranging from preferably 25 to 200 parts by mass, and more preferably 30 to 150 parts by mass, relative to 100 parts by mass of the ionizing radiation-curable resin with a cyclic structure.

The ionizing radiation-curable resin preferably further contains a monomer. The monomer is preferably an acrylate. The monomer preferably has one or more and four or less functional groups. The monomer preferably has a viscosity at 25 °C of about 100 mPa·s or less. The monomer preferably contains no cyclic structure. That is, the monomer is preferably an acyclic acrylate. When the surface protection layer contains a monomer, the surface protection layer can have higher scratch resistance. The monomer can also reduce the viscosity of the surface protection layer coating solution.

Examples of the monomer include tripropylene glycol diacrylate, 1,6-hexanediol diacrylate, dipropylene glycol diacrylate, PO-modified neopentyl glycol diacrylate, trimethylolpropane triacrylate, trimethylolpropane ethoxylated triacrylate, glycerin propoxylated triacrylate, pentaerythritol, pentaerythritol ethoxylated tetraacrylate, and pentaerythritol (tri/tetra)acrylate. The monomers may be used singly or in any combination of two or more.

The ionizing radiation-curable resin preferably contains the monomer in a proportion ranging from 0 to 60% by mass. The ionizing radiation-curable resin more preferably contains the monomer in a proportion ranging from 10 to 50% by mass, and still preferably 20 to 40% by mass.

The monomer is contained in the surface protection layer in an amount ranging from preferably 10 to 1000 parts by mass, and more preferably 20 to 800 parts by mass, relative to 100 parts by mass of the ionizing radiation-curable resin with a cyclic structure.

As described above, the main component of the ionizing radiation-curable resin (i.e., the entire ionizing radiation-curable resin containing an ionizing radiation-curable resin with a cyclic structure) is preferably acrylate. As used herein, the main component of the ionizing radiation-curable resin means a component accounting for 60% by mass or more of the ionizing radiation-curable resin. The ionizing radiation-curable resin preferably contains acrylate in an amount of 70 parts by mass or more, and more preferably 80 parts by mass or more. Although different acrylates may be mixed, the average number of functional groups is preferably greater than or equal to 1.1. To obtain the surface protection layer 5 having high scratch resistance, the average number of functional groups is preferably greater than or equal to 2.0. Although the average number of functional groups of the acrylates has no upper limit, the upper limit in an example is smaller than or equal to 6.0.

The surface protection layer 5 may contain particles. The addition of an optimal amount of particles having an optimal particle size enables formation of a uniform surface. Examples of the particles that can be used include organic materials such as polyethylene (PE) wax, polypropylene (PP) wax, and resin beads and inorganic materials such as silica, glass, alumina, titania, zirconia, calcium carbonate, and barium sulfate. It is desirable for the particles to have an average particle size (D50) of 10 μm or less. It is desirable for the particles to have an average particle size (D50) of 3 μm or more. The average particle size (D50) of the particles is preferably 3 μm or more and 10 μm or less, and more preferably 4 μm or more and 10 μm or less.

The surface protection layer 5 containing particles enables the surface of the coating film to wrinkle more uniformly in the first irradiation step described later. When large particles are used, the particles may easily detach the surface protection layer 5, making it difficult to achieve high scratch resistance. Small particles are less effective in generating uniform wrinkles.

As used herein, the average particle size (D50) may be a median diameter (D50) measured by a laser diffraction/scattering particle size distribution analyzer. When the surface protection layer coating solution contains particles, the surface protection layer 5 obtained from the coating solution also contains the particles. The average particle size of the particles contained in the surface protection layer 5 may be a value obtained by actually measuring and averaging the particle sizes of multiple particles through cross-section observation. The value thus obtained is substantially the same value as the median diameter (D50) measured by a laser diffraction/scattering particle size distribution analyzer. Thus, the above-described range of the average particle size may also be read as the range of the average particle size of the particles contained in the surface protection layer 5.

The particles are preferably contained in the surface protection layer 5 in an amount ranging from 0.5 to 10 parts by mass, relative to 100 parts by mass of the entire ionizing radiation-curable resin. The particle content is more preferably within the range of 3 to 10 parts by mass, and still more preferably within the range of 4 to 10 parts by mass, relative to 100 parts by mass of the entire ionizing radiation-curable resin. The term "100 parts by mass of the ionizing radiation-curable resin" refers to parts by mass of the resin solids.

The particle content within the above-described range is particularly effective in generating uniform wrinkles. When the particle content is high, the particles may easily detach from the surface protection layer 5, making it difficult to achieve high scratch resistance. When the particle content is low, the particles are less effective in generating uniform wrinkles.

When the entire surface protection layer 5 is cured by UV light, it is necessary to add a photoinitiator to the surface protection layer 5. The photoinitiator is not limited to a particular type, and examples thereof include benzophenone-based, acetophenone-based, benzoin ether-based, and thioxanthone-based photoinitiators.

In order to impart required functions, the surface protection layer 5 may further contain an additive such as an antibacterial agent or an antifungal agent. Moreover, an ultraviolet absorber and a light stabilizer may also be contained as other additives, as appropriate. The ultraviolet absorber is typically added in any combination between, for example, benzotriazole-based, benzoate-based, benzophenone-based, and triazine-based ultraviolet absorbers, and the light stabilizer is typically added in any combination between, for example, hindered amine-based light stabilizers.

Examples of the hindered amine-based light stabilizer include bis(1,2,2,6,6-pentamethyl-4-piperidyl)[[3,5-bis(1,1-dimethylethyl)-4-hydroxyphenyl]methyl]butylmalonate (such as "Tinuvin 144," trade name, manufactured by BASF Corporation), "Tinuvin 123," trade name, manufactured by BASF Corporation, bis(2,2,6,6-tetramethyl-1-(octyloxy)-4-piperidinyl) decanedioate, and reaction products of (1,1-dimethylethyl hydroperoxide) and octane.

When the hindered amine-based light stabilizer is added to the surface protection layer 5, the amount added is preferably within the range of 0.05 parts by mass or more and 5 parts by mass or less, relative to 100 parts by mass of the ionizing radiation-curable resin. The added amount of the hindered amine-based light stabilizer is more preferably within the range of 0.2 parts by mass or more and 3 parts by mass or less. When the added amount of the hindered amine-based light stabilizer is smaller than 0.05 parts by mass, the resin may have low stability against ultraviolet radiation. In contrast, when the added amount is larger than 5 parts by mass, bleed-out is more likely to occur. The surface protection layer 5 can be formed by irradiating a surface area with light at 200 nm or less to cause curing shrinkage, forming a fine uneven shape. In this case, when the hindered amine-based light stabilizer is contained in an amount greater than 3 parts by mass, the curing of the surface area may be inhibited. In order to achieve both low gloss and weather resistance, it is desirable for the hindered amine-based light stabilizer to be contained in an amount of 3 parts by mass or less.

It is desirable for the surface protection layer 5 to have a gloss level smaller than or equal to 10.0. The gloss level of the surface protection layer 5 is more preferably smaller than or equal to 5.0. As used herein, the term "gloss level" is a measurement value obtained by measurement using a gloss meter in conformity with JIS Z 8741:1997, with an incidence angle of 60 degrees.

<1.5> Primer Layer

The primer layer 6 can be basically made of the same material as that of the pattern layer 3. Considering that the primer layer 6 is provided on the rear surface of the decorative sheet 1, and the sheet is wound into a web, an inorganic filler such as silica, alumina, magnesia, titanium oxide, or barium sulfate may be added in order to prevent blocking and enhance the adhesion to the adhesive. Because the purpose of the primer layer 6 is to ensure adhesion to the substrate B, the coating thickness of the primer layer 6 is preferably 0.1 $\mu$m or more and 3.0 $\mu$m or less. The primer layer 6 is needed when the primary film layer 2 is a material with an inert surface, such as an olefinic material. However, the primer layer 6 may not be necessary when the surface is reactive.

<2> Method for Producing Decorative Sheet

The decorative sheet 1 is produced by, for example, the following method. For simplicity, explanation regarding the pattern layer 3, the transparent resin layer 4, the adhesive resin layer 4b, and the primer layer 6 will be omitted here.

First, a coating film made from the surface protection layer coating solution is formed over one surface of the primary film layer 2. As described in the section, <1.4> Surface Protection Layer, the surface protection layer coating solution contains the ionizing radiation-curable resin as well as particles and additives, as appropriate. The coating film made from the surface protection layer coating solution can be formed by, for example, printing.

After the coating film made from the surface protection layer coating solution is formed, the first irradiation step is performed. In the first irradiation step, the coating film is irradiated with light with a wavelength of 200 nm or less (hereinafter referred to as the first radiation). The ionizing radiation-curable resin contained in the surface protection layer coating solution has a high absorption coefficient for the first radiation. Therefore, the first radiation incident on the coating film can reach a position of only tens to hundreds of nanometers below the outermost surface. Thus, in the first irradiation step, cross-linking reactions proceed in the surface area of the coating film to form an ultrathin cured film, whereas the other areas remain uncured because cross-linking reactions do not proceed.

The coating film after the first irradiation step has wrinkles on its surface that correspond to the ridged portions 5B. The present inventors believe that the surface of the coating film wrinkles on the first irradiation step for the following reasons.

As described above, the first radiation can reach a position of only tens to hundreds of nanometers below the outermost surface of the coating film. That is, the ionizing radiation-curable resin cross-links only in the surface of the coating film, and the areas deeper than tens to hundreds of nanometers below the outermost surface are uncured and have highly fluid molecules. Such highly fluid molecules swell the cured film to increase the volume of the cured film. In response to the in-plane compressive stress generated when the volume increases in an in-plane direction, the cured film buckles to cause wrinkles on the surface of the coating film.

The first radiation can be extracted from excimer VUV light. The excimer VUV light can be produced from a lamp that uses a noble gas or a noble gas halide compound. When a lamp with a noble gas or a noble gas halide compound gas sealed in it is externally provided with high energy electrons, the lamp generates a large amount of discharge plasma (dielectric barrier discharge). This plasma discharge excites atoms of the discharge gas (noble gas) and instantaneously converts them into an excimer state. When the atoms return from the excimer state to the ground state, light having a wavelength in a range specific to that excimer is emitted.

The gas used for the excimer lamp may be any conventionally used gas as long as the gas causes emission of light at 200 nm or less. As the gas, a noble gas such as Xe, Ar, or Kr, or a mixed gas of a noble gas with a halogen gas, such as ArBr or ArF, can be used. The excimer lamp emits light of different center wavelengths depending on the gas, such as about 172 nm (Xe), about 126 nm (Ar), about 146 nm (Kr), about 165 nm (ArBr), and about 193 nm (ArF).

In consideration of the magnitude of photon energy and the difference between the wavelength and the bond energy of organic matter, a xenon lamp that emits excimer light having a center wavelength of 172 nm is preferably used as a light source. Also in consideration of facility maintenance costs, material availability, and the like, a xenon lamp is preferably used as a light source.

The first irradiation step is performed under an atmosphere having a low oxygen concentration. Oxygen has a high absorption coefficient for light at 200 nm or less. Thus, the first irradiation step is preferably performed, for example, under a nitrogen gas atmosphere. The oxygen concentration of the gas phase in the first irradiation step, or the concentration of the residual oxygen in the reactive atmosphere, is preferably 2,000 ppm or less, and more preferably 1,000 ppm or less.

The oxygen in the atmosphere inhibits radical polymerization. Thus, the concentration of the residual oxygen in the reactive atmosphere influences wrinkling in the surface of the coating film. Thus, when the concentration of the residual oxygen in the reactive atmosphere is changed, the surface texture of the surface protection layer 5 may change.

The integrated light intensity of the first radiation is preferably 0.5 mJ/cm$^2$ or more and 200 mJ/cm$^2$ or less, more preferably 1 mJ/cm$^2$ or more and 100 mJ/cm$^2$ or less, still more preferably 3 mJ/cm$^2$ or more and 50 mJ/cm$^2$ or less, and most preferably 5 mJ/cm$^2$ or more and 30 mJ/cm$^2$ or less. When the integrated light intensity is reduced, the expansion of the cured film in an in-plane direction is reduced. When the integrated light intensity is increased, the surface state of the coating film deteriorates.

After the first irradiation step is ended, the second irradiation step is performed. In the second irradiation step, the coating film is irradiated with second radiation to cure the entire coating film. As a result, the surface protection layer 5 is obtained.

The second radiation is ionizing radiation such as an electron beam or ultraviolet radiation having a wavelength longer than the first radiation. When ultraviolet radiation is used as the second radiation, the ultraviolet radiation is to have a wavelength for which the ionizing radiation-curable resin exhibits a small absorption coefficient.

The integrated light intensity of the second radiation is preferably 10 mJ/cm$^2$ or more and 500 mJ/cm$^2$ or less, more preferably 50 mJ/cm$^2$ or more and 400 mJ/cm$^2$ or less, and still more preferably 100 mJ/cm$^2$ or more and 300 mJ/cm$^2$ or less.

<3> Effects and Others

The decorative sheet 1 according to the present embodiment includes the surface protection layer 5 having an uneven shape formed on the surface thereof. The decorative sheet 1 according to the present embodiment contains a cured product of an ionizing radiation-curable resin in the surface protection layer 5, and the ionizing radiation-curable resin contains an ionizing radiation-curable resin with a cyclic structure in a predetermined amount. This allows the decorative sheet 1 according to the present embodiment to have low gloss and high stain resistance.

Since the decorative sheet 1 according to the present embodiment includes the surface protection layer 5 having an uneven shape formed in the surface thereof, the gloss (gloss level) of the surface protection layer can be adjusted without a gloss adjuster (matting additive) contained in the surface protection layer. Because a gloss adjuster reduces the oil repellency of a layer formed from a resin material, the layer is prone to fingerprints. The surface protection layer 5 contains no gloss adjuster and thus absorbs no oil, resulting in relatively improved oil repellency. Therefore, in various situations during on-site construction, furniture assembly, and daily life of residents, fingerprints are less likely to adhere to the decorative sheet 1 including the surface protection layer 5.

Further, the configuration of the surface protection layer 5 having an uneven shape formed on the surface thereof improves oil repellency of the surface protection layer 5 and enables suppression of oil stains on the surface of the decorative sheet 1 and adsorption of contaminants thereto.

Furthermore, the configuration of the surface protection layer 5 containing no gloss adjuster does not allow detachment of particles of a gloss adjuster when the surface of the decorative sheet 1 is scratched, and the configuration enables a gloss change or scratches to be less likely to occur on the surface of the decorative sheet 1.

Furthermore, the configuration of the surface protection layer 5 containing no gloss adjuster does not undergo whitening that may occur due to a gloss adjuster during bending, and can thus prevent a reduction in bendability.

The surface protection layer 5 having the above-described surface texture can be obtained by the above-described method for the following reasons.

The oxygen in the gas phase absorbs short-wavelength ultraviolet radiation and also inhibits radical polymerization. In the coating film made from the ionizing radiation-curable resin, the influence of the oxygen in the gas phase on radical polymerization is greatest in the area adjacent to the gas phase and decreases as distance from the surface of the coating film increases. Therefore, in the first irradiation step, the oxygen concentration of the gas phase can be varied to change the relationship between distance from the surface of the coating film and the progress of cross-linking reactions.

The change in this relationship also changes the thickness of the cured film formed on the surface of the coating film in the first irradiation step and the degree of the expansion of the cured film in the in-plane direction that depends on the progress of cross-linking reactions. The thickness of the cured film and the degree of the expansion of the cured film in the in-plane direction are also influenced by the integrated light intensity in the first irradiation step. The thickness of the cured film and the degree of the expansion of the cured film in the in-plane direction influence the surface texture of the surface protection layer. Furthermore, the size and amount of the particles contained in the coating film and the thickness of the coating film also influence wrinkling.

Thus, for example, the composition of the ionizing radiation-curable resin, the thickness of the coating film, the oxygen concentration of the gas phase in the first irradiation step, and the integrated light intensity in the first irradiation step can be appropriately determined to obtain a surface protection layer having a desired surface texture.

Examples

Examples of the present invention will be described below.

<Example 1>

With use of a 55-$\mu$m-thick olefin film (manufactured by RIKEN TECHNOS CORP.) as the primary film layer 2, one surface of the primary film layer 2 was subjected to corona treatment, and the pattern layer 3 was formed by printing a pattern on the one surface. The pattern layer 3 was formed with ink obtained by adding a hindered amine-based light stabilizer (Chimassorb 944, manufactured by BASF Corporation) to two-component urethane ink (V180, manufactured by Toyo Ink Co., Ltd.) in an amount of 0.5 parts by mass relative to the binder resin content in the ink.

Next, the primer layer 6 was formed on the rear surface of the primary film layer 2. The primer layer 6 was formed by printing the same two-component urethane ink as the pattern layer 3.

Next, the pattern layer 3 was coated with the surface protection layer coating solution. The layer thickness of the surface protection layer coating solution was set to 5 $\mu$m. The surface protection layer coating solution used was obtained by blending the following ionizing radiation-curable resin with the following additives (particles, photoinitiator).

• Ionizing radiation-curable resin

   Resin 1 (resin with a cyclic structure):

      Type: 2-adamantyl prop-2-enoate (bulky cyclic acrylate)

      Blended: 40 parts by mass

   Resin 2 (monomer):

Type: tripropylene glycol diacrylate (TPGDA) (bifunctional acrylate)

Blended: 30 parts by mass

Resin 3 (oligomer):

Type: EBECRYL 9270 (bifunctional urethane acrylate) (manufactured by Daicel-Allnex Ltd.)

Blended: 30 parts by mass

• Particles

Product name: SYLYSIA 250N (manufactured by Fuji Silysia Chemical Ltd.)

Particle size: 5 $\mu$m

Blended: 5 parts by mass

• Photoinitiator

Product name: Omnirad 184 (manufactured by IGM Resins)

Blended: 3 parts by mass

In resin 1 (resin with a cyclic structure) used in Example 1, the cyclic structure is an adamantyl group ($C_{10}H_{15}$). Since the adamantyl group is a bridged ring, resin 1 used in Example 1 can be referred to as a bulky cyclic acrylate.

The first irradiation step was then performed. Specifically, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm until the integrated light intensity reached 30 mJ/cm$^2$. This irradiation produced wrinkling on the surface of the coating film.

Subsequently, the second irradiation step was performed. Specifically, a high-pressure mercury lamp was used to irradiate the coating film with ultraviolet radiation until the dose reached 200 mJ/cm$^2$ to cure the entire coating film, forming the surface protection layer 5.

<Example 2>

A decorative sheet was produced in the same manner as in Example 1 except that resin 1 used in Example 1 (resin with a cyclic structure) was replaced with the following.

Type: dicyclopentanyl acrylate (bulky cyclic acrylate)

Blended: 40 parts by mass

In resin 1 (resin with a cyclic structure) used in Example 2, the cyclic structure is a dicyclopentanyl group ($C_{10}H_{15}$). Since the dicyclopentanyl group is a bridged ring, resin 1 used in Example 2 can be referred to as a bulky cyclic acrylate.

<Example 3>

A decorative sheet was produced in the same manner as in Example 1 except that resin 1 used in Example 1 (resin with a cyclic structure) was replaced with the following.

Type: 4-tert-butylcyclohexyl acrylate (cyclic acrylate)
Blended: 40 parts by mass

In resin 1 (resin with a cyclic structure) used in Example 3, the cyclic structure is the ring part of a 4-tert-butylcyclohexyl group ($C_6H_{10}$).

<Example 4>

A decorative sheet was produced in the same manner as in Example 1 except that resin 1 used in Example 1 (resin with a cyclic structure) was replaced with the following.

Type: cyclohexyl acrylate (cyclic acrylate)

Blended: 40 parts by mass

In resin 1 (resin with a cyclic structure) used in Example 4, the cyclic structure is a cyclohexyl group ($C_6H_{11}$).

<Example 5>

A decorative sheet was produced in the same manner as in Example 1 except that the ionizing radiation-curable resin used in Example 1 was replaced with the following.

Resin 1 (resin with a cyclic structure):

Type: 2-adamantyl prop-2-enoate (bulky cyclic acrylate)

Blended: 10 parts by mass

Resin 2 (monomer):

Type: tripropylene glycol diacrylate (TPGDA) (bifunctional acrylate)

Blended: 30 parts by mass

Resin 3 (oligomer):

Type: EBECRYL 9270 (bifunctional urethane acrylate) (manufactured by Daicel-Allnex Ltd.)

Blended: 60 parts by mass

<Example 6>

A decorative sheet was produced in the same manner as in Example 1 except that the ionizing radiation-curable resin used in Example 1 was replaced with the following.

Resin 1 (resin with a cyclic structure):

Type: 2-adamantyl prop-2-enoate (bulky cyclic acrylate)

Blended: 80 parts by mass

Resin 3 (oligomer):

Type: EBECRYL 9270 (bifunctional urethane acrylate) (manufactured by Daicel-Allnex Ltd.)

Blended: 20 parts by mass

<Example 7>

A decorative sheet was produced in the same manner as in Example 1 except that resin 1 used in Example 1 (resin with a cyclic structure) was replaced with the following.

Type: tricyclodecane dimethanol diacrylate (bulky cyclic acrylate)

Blended: 40 parts by mass

In resin 1 (resin with a cyclic structure) used in Example 7, the cyclic structure is a tricyclodecane group ($C_{10}H_{14}$). Since the tricyclodecane group is a bridged ring, resin 1 used in Example 7 can be referred to as a bulky cyclic acrylate.

<Example 8>

A decorative sheet was produced in the same manner as in Example 1 except that resin 3 (oligomer) used in Example 1 was replaced with the following.

Type: EBECRYL 4666 (tetrafunctional urethane acrylate) (manufactured by Daicel-Allnex Ltd.)

Blended: 30 parts by mass

<Example 9>

A decorative sheet was produced in the same manner as in Example 1 except that resin 3 (oligomer) used in Example 1 was replaced with the following.

Type: EBECRYL 5129 (hexafunctional urethane acrylate) (manufactured by Daicel-Allnex Ltd.)
Blended: 30 parts by mass

<Example 10>

A decorative sheet was produced in the same manner as in Example 1 except that resin 3 (oligomer) used in Example 1 was replaced with the following.

Type: UN-904 (decafunctional urethane acrylate) (manufactured by Negami Chemical Industrial Co., Ltd.)

Blended: 30 parts by mass

<Example 11>

A decorative sheet was produced in the same manner as in Example 1 except that resin 3 (oligomer) used in Example 1 was replaced with the following.

Type: OAP-5000 (acrylic acrylate) (manufactured by Negami Chemical Industrial Co., Ltd.)

Blended: 30 parts by mass

<Example 12>

A decorative sheet was produced in the same manner as in Example 1 except that the ionizing radiation-curable resin used in Example 1 was replaced with the following.

Resin 1 (resin with a cyclic structure):

Type: 2-adamantyl prop-2-enoate (bulky cyclic acrylate)

Blended: 4 parts by mass

Resin 2 (monomer):

Type: tripropylene glycol diacrylate (TPGDA) (bifunctional acrylate)

Blended: 66 parts by mass

Resin 3 (oligomer):

EP 4 755 628 A1

Type: EBECRYL 9270 (bifunctional urethane acrylate) (manufactured by Daicel-Allnex Ltd.)

Blended: 30 parts by mass

<Example 13>

A decorative sheet was produced in the same manner as in Example 1 except that the ionizing radiation-curable resin used in Example 1 was replaced with the following.

Resin 1 (resin with a cyclic structure):

Type: 2-adamantyl prop-2-enoate (bulky cyclic acrylate)

Blended: 90 parts by mass

Resin 3 (oligomer):

Type: EBECRYL 9270 (bifunctional urethane acrylate) (manufactured by Daicel-Allnex Ltd.)

Blended: 10 parts by mass

<Comparative Example 1>

A decorative sheet was produced in the same manner as in Example 1 except that the amount of particles added in Example 1 was changed as follows and the first irradiation step in Example 1 was not performed.

• Particles

Product name: SYLYSIA 250N (manufactured by Fuji Silysia Chemical Ltd.)

Particle size: 5 μm

Blended: 10 parts by mass

<Comparative Example 2>

A decorative sheet was produced in the same manner as in Example 1 except that resin 1 used in Example 1 (resin with a cyclic structure) was replaced with the following.

Type: butyl acrylate (acyclic acrylate)

Blended: 40 parts by mass

<Comparative Example 3>

A decorative sheet was produced in the same manner as in Example 1 except that the ionizing radiation-curable resin used in Example 1 was replaced with the following.

Resin 2 (monomer):

Type: tripropylene glycol diacrylate (TPGDA) (bifunctional acrylate)

Blended: 70 parts by mass

Resin 3 (oligomer):

Type: EBECRYL 9270 (bifunctional urethane acrylate) (manufactured by Daicel-Allnex Ltd.)

Blended: 30 parts by mass

<Evaluation>

Each of the above decorative sheets was evaluated as follows.

(1) Thickness of Surface Protection Layer

The thickness of the surface protection layer was measured as follows. The decorative sheet was embedded in a resin such as a cold-setting epoxy resin or a UV curable resin, and the resin was sufficiently cured. The resultant product was then cut so that the cross section of the decorative sheet appeared, and the cross section was subjected to mechanical polishing to give a measurement surface. Subsequently, a scanning electron microscope, SIGMA 500, manufactured by Carl Zeiss Microscopy GmbH, was used to image the cross section of the surface protection layer. In this imaging, the accelerating voltage was 0.5 keV (low accelerating voltage), the imaging mode was the SE2 mode, and the magnification was 2,000. The measurement sample was not subjected to sputtering. Next, from this cross-sectional image, the dimension of the surface protection layer in the width direction of the ridged portions and the area of the cross section of the surface protection layer were determined. The thickness of the surface protection layer was calculated by dividing the area by the above dimension. The measurement was performed at 25 random points, and the value obtained by averaging the 25 points was defined as the thickness t of the surface protection layer. The thickness t of the surface protection layer was equal to the thickness of the coating film made from the surface protection layer coating solution.

(2) Surface Condition

The surface condition was evaluated for surface uniformity by visual inspection. The evaluation criteria were as follows.

AA: very uniform surface condition

A: uniform surface condition

B: partially nonuniform

C: nonuniform surface condition over the entire surface

(3) Gloss Level

The gloss level was determined by using a Rhopoint IQ (manufactured by Konica Minolta, Inc.) to measure the 60-degree gloss level.

(4) Fingerprint Resistance

As an evaluation of fingerprint resistance, an evaluation of fingerprint wipe-off properties was conducted.
The 60-degree gloss level of the surface of the decorative sheets was measured and defined as an initial gloss level. Subsequently, a fingerprint-resistance evaluation solution was adhered onto the surface protection layer of each decorative sheet and then the fingerprint-resistance evaluation solution adhered to the surface of the decorative sheet was wiped off. Thereafter, the 60-degree gloss level of the part from which the fingerprint-resistance evaluation solution had been wiped off was measured and defined as a post-wipe-off gloss level. Here, as the fingerprint-resistance evaluation solution, a higher fatty acid was used.
The fingerprint wipe-off rate was calculated from the following equation:

Fingerprint wipe-off rate (%) = (post-wipe-off gloss level/initial gloss level) $\times$ 100

The evaluation criteria were as follows.

A: 70% or more and less than 250%

B: 50% or more and less than 70%, or 250% or more and less than 300%

C: less than 50% or 300% or more

(5) Stain Resistance

As an evaluation of stain resistance, stain resistance against hair dye was evaluated.

The surface protection layer of each decorative sheet was coated with hair dye and then allowed to stand for 24 hours. The hair dye used was Bigen Cream Tone 7G (natural dark brown) (Hoyu Co., Ltd.). Subsequently, the hair dye was wiped off with a water-moistened cloth, and the degree of staining was evaluated by visual inspection.

The evaluation criteria were as follows.

AA: no staining observed

A: partial slight staining observed, hardly noticeable

B: overall faint staining observed

C: staining observed

(6) Scratch Resistance

A nail scratch test was conducted to evaluate scratch resistance.

The surface of the surface protection layer of each decorative sheet was scratched in a straight line in one direction with a fingernail, and the occurrence of scratching and change in gloss were checked by visual inspection.

The evaluation criteria were as follows.

AA: no appearance change observed

A: slight gloss change observed

B: slight scratch observed

C: significant scratch observed

(7) Processability

A wrapping test was conducted to evaluate processability. The decorative sheet was bonded to a medium-density fiberboard (MDF) material with adhesive, and the MDF material was grooved and bent to 90 degrees. The surface of each decorative sheet was observed for whitening or cracks at the bend through an optical microscope, and the state of processability was evaluated. The wrapping processability corresponds to bendability.

The evaluation criteria were as follows.

A: neither whitening nor crack observed

B: partial whitening observed

C: overall whitening observed or partial crack observed

The evaluation results are listed in the following tables. Evaluation results rated B or higher are regarded as passing.

[Table 1]

| | | | EX. 1 | EX. 2 | EX. 3 | EX. 4 | EX. 5 | EX. 6 |
|---|---|---|---|---|---|---|---|---|
| SURFACE SHAPE | | | RIDGED | RIDGED | RIDGED | RIDGED | RIDGED | RIDGED |
| IONIZING RADIATION-CURABLE RESIN | RESIN 1 (RESIN WITH CYCLIC STRUCTURE) | TYPE | 2-ADAMANTYL PROP-2-ENO-ATE | DICYCLOPENTANYL ACRY-LATE | 4-TERT-BUTYL-CYCLO HEXYL ACRYLATE | CYCLOHEXYL ACRYLATE | 2-ADAMANTYL PROP-2-ENOATE | 2-ADAMANTYL PROP-2-ENOATE |
| | | STRUCTUR E | BULKY CYCLIC ACRYLATE | BULKY CYCLIC ACRYLATE | CYCLIC ACRYLATE | CYCLIC ACRYLATE | BULKY CYCLIC ACRYLATE | BULKY CYCLIC ACRYLATE |
| | | NUMBER OF FUNCTION AL GROUPS | 1 | 1 | 1 | 1 | 1 | 1 |
| | | PROPORTI ON (MASS %) | 40 | 40 | 40 | 40 | 10 | 80 |
| | RESIN 2 (MONOMER) | TYPE | TPGDA | TPGDA | TPGDA | TPGDA | TPGDA | - |
| | | NUMBER OF FUNCTION AL GROUPS | 2 | 2 | 2 | 2 | 2 | - |
| | | PROPORTI ON (MASS %) | 30 | 30 | 30 | 30 | 30 | 0 |
| | RESIN 3 (OLIGOMER) | TYPE | EBECRYL 9270 | EBECRYL 9270 | EBECRYL 9270 | EBECRYL 9270 | EBECRYL 9270 | EBECRYL 9270 |
| | | NUMBER OF FUNCTION AL GROUPS | 2 | 2 | 2 | 2 | 2 | 2 |
| | | PROPORTI ON (MASS %) | 30 | 30 | 30 | 30 | 60 | 20 |
| | PROPORTION OF CYCLIC STRUCTURE PART OF IONIZING RADIATION-CURABLE RESIN (MASS %) | | 21.7 | 26.2 | 15.6 | 21.5 | 5.4 | 43.5 |
| SURFACE ROUGHNESS | RSm/Ra | | 300 | 290 | 270 | 280 | 380 | 220 |
| THICKNESS OF SURFACE PROTECTION LAYER ($\mu$m) | | | 5 | 5 | 5 | 5 | 5 | 5 |
| EXCIMER IRRADIATION | INTEGRATED LIGHT INTENSITY | | 10 | 10 | 10 | 10 | 10 | 10 |

(continued)

| | | | EX. 1 | EX. 2 | EX. 3 | EX. 4 | EX. 5 | EX. 6 |
|---|---|---|---|---|---|---|---|---|
| SURFACE SHAPE | | | RIDGED | RIDGED | RIDGED | RIDGED | RIDGED | RIDGED |
| EVALUATION | SURFACE CONDITION | | AA | AA | AA | AA | AA | AA |
| | 60° GLOSS VALUE | | 2.9 | 2.8 | 2.6 | 2.6 | 4.1 | 2.3 |
| | FINGERPRINT RESISTANCE | | AA | AA | AA | AA | AA | AA |
| | STAIN RESISTANCE | HAIR DYE | A | A | A | A | B | AA |
| | SCRATCH RESISTANCE | NAIL SCRATCH | B | A | B | B | A | B |
| | PROCESSABILITY | WRAPPING | AA | AA | AA | AA | AA | AA |

[Table 2]

| | | | EX. 7 | EX. 8 | EX. 9 | EX. 10 | EX. 11 |
|---|---|---|---|---|---|---|---|
| | SURFACE SHAPE | | RIDGED | RIDGED | RIDGED | RIDGED | RIDGED |
| IONIZING RA-DIATION-CUR-ABLE RESIN | RESIN 1 (RESIN WITH CYCLIC STRUCTURE) | TYPE | TRICYCLODECANE DI-METHANOL DIACRY-LATE | 2-ADAMANTYL PROP-2-ENOATE | 2-ADAMANTYL PROP-2-ENOATE | 2-ADAMANTYL PROP-2-ENOATE | 2-ADAMANTYL PROP-2-ENO-ATE |
| | | STRUCTURE | BULKY CYCLIC ACRY-LATE | BULKY CYCLIC ACRYLATE | BULKY CYCLIC ACRYLATE | BULKY CYCLIC ACRYLATE | BULKY CYCLIC ACRYLATE |
| | | NUMBER OF FUNCTIONAL GROUPS | 2 | 1 | 1 | 1 | 1 |
| | | PROPORTION (MASS %) | 40 | 40 | 40 | 40 | 40 |
| | RESIN 2 (MONOMER) | TYPE | TPGDA | TPGDA | TPGDA | TPGDA | TPGDA |
| | | NUMBER OF FUNCTIONAL GROUPS | 2 | 2 | 2 | 2 | 2 |
| | | PROPORTION (MASS %) | 30 | 30 | 30 | 30 | 30 |
| | RESIN 3 (OLIGOMER) | TYPE | EBECRYL 9270 | EBECRYL 4666 | EBECRYL 5129 | UN-904 | OAP-5000 |
| | | NUMBER OF FUNCTIONAL GROUPS | 2 | 4 | 6 | 10 | - |
| | | PROPORTION (MASS %) | 30 | 30 | 30 | 30 | 30 |
| | PROPORTION OF CYCLIC STRUCTURE PART OF IONIZING RADIATION-CURABLE RESIN (MASS %) | | 17.6 | 21.7 | 21.7 | 21.7 | 21.7 |
| SURFACE ROUGHNESS | RSm/Ra | | 420 | 480 | 510 | 550 | 240 |
| THICKNESS OF SURFACE PROTECTION LAYER ($\mu$m) | | | 5 | 5 | 5 | 5 | 5 |
| EXCIMER IRRADIATION | INTEGRATED LIGHT INTENSITY | | 10 | 10 | 10 | 10 | 10 |

(continued)

| | | | EX. 7 | EX. 8 | EX. 9 | EX. 10 | EX. 11 |
|---|---|---|---|---|---|---|---|
| | SURFACE SHAPE | | RIDGED | RIDGED | RIDGED | RIDGED | RIDGED |
| EVALUATION | SURFACE CONDITION | | A | A | A | A | AA |
| | 60° GLOSS VALUE | | 5.1 | 6.5 | 7.2 | 8.5 | 2.5 |
| | FINGERPRINT RESISTANCE | | AA | AA | A | A | AA |
| | STAIN RESISTANCE | HAIR DYE | A | A | AA | AA | A |
| | SCRATCH RESISTANCE | NAIL SCRATCH | A | AA | AA | AA | B |
| | PROCESSABILITY | WRAPPING | AA | A | B | B | AA |

[Table 3]

| | | | EX. 12 | EX. 13 | COMP. EX. 1 | COMP. EX. 2 | COMP. EX. 3 |
|---|---|---|---|---|---|---|---|
| SURFACE SHAPE | | | RIDGED | RIDGED | UNEVENNESS BY PARTICLES | RIDGED | RIDGED |
| IONIZING RADIATION-CURABLE RESIN | RESIN 1 (RESIN WITH CYCLIC STRUCTURE) | TYPE | 2-ADAMANTYL PROP-2-ENOATE | 2-ADAMANTYL PROP-2-ENOATE | 2-ADAMANTYL PROP-2-ENOATE | BUTYL ACRYLATE | - |
| | | STRUCTURE | BULKY CYCLIC ACRYLATE | BULKY CYCLIC ACRYLATE | BULKY CYCLIC ACRYLATE | ACYCLIC ACRYLATE | - |
| | | NUMBER OF FUNCTIONAL GROUPS | 1 | 1 | 1 | 1 | - |
| | | PROPORTION (MASS %) | 4 | 90 | 40 | 40 | 0 |
| | RESIN 2 (MONOMER) | TYPE | TPGDA | - | TPGDA | TPGDA | TPGDA |
| | | NUMBER OF FUNCTIONAL GROUPS | 2 | - | 2 | 2 | 2 |
| | | PROPORTION (MASS %) | 66 | 0 | 30 | 30 | 70 |
| | RESIN 3 (OLIGOMER) | TYPE | EBECRYL 9270 | EBECRYL 9270 | EBECRYL 9270 | EBECRYL 9270 | EBECRYL 9270 |
| | | NUMBER OF FUNCTIONAL GROUPS | 2 | 2 | 2 | 2 | 2 |
| | | PROPORTION (MASS %) | 30 | 10 | 30 | 30 | 30 |
| | PROPORTION OF CYCLIC STRUCTURE PART OF IONIZING RADIATION-CURABLE RESIN (MASS %) | | 2.2 | 48.9 | 21.7 | 0 | 0 |
| SURFACE ROUGHNESS | RSm/Ra | | 370 | 210 | 750 | 310 | 380 |
| THICKNESS OF SURFACE PROTECTION LAYER ($\mu$m) | | | 5 | 5 | 5 | 5 | 5 |
| EXCIMER IRRADIATION | INTEGRATED LIGHT INTENSITY | | 10 | 10 | 0 | 10 | 10 |

(continued)

| | | | EX. 12 | EX. 13 | COMP. EX. 1 | COMP. EX. 2 | COMP. EX. 3 |
|---|---|---|---|---|---|---|---|
| | SURFACE SHAPE | | RIDGED | RIDGED | UNEVENNESS BY PARTICLES | RIDGED | RIDGED |
| EVALUATION | SURFACE CONDITION | | AA | AA | A | AA | AA |
| | 60° GLOSS VALUE | | 3.9 | 2.3 | 5.3 | 3.2 | 4.1 |
| | FINGERPRINT RESISTANCE | | AA | C | C | AA | AA |
| | STAIN RESISTANCE | HAIR DYE | B | B | C | C | C |
| | SCRATCH RESISTANCE | NAIL SCRATCH | A | C | B | B | A |
| | PROCESSABILITY | WRAPPING | AA | B | A | AA | AA |

The above tables show the composition of each ionizing radiation-curable resin and also the proportion (% by mass) of "the cyclic structure part of resin 1 (resin with a cyclic structure)" in the entire ionizing radiation-curable resin. When resin 1 (resin with a cyclic structure) contains a substituent in the cyclic structure, the "cyclic structure part" refers to the ring part excluding the substituent.

As listed in the tables, the decorative sheets according to examples 1 to 13 contain a cured product of an ionizing radiation-curable resin in the surface protection layer, and the ionizing radiation-curable resin contains an ionizing radiation-curable resin with a cyclic structure. The decorative sheets according to Examples 1 to 13 had low gloss and high stain resistance. Furthermore, the decorative sheets according to Examples 1 to 12 contain a cured product of an ionizing radiation-curable resin in the surface protection layer, and the ionizing radiation-curable resin contains an ionizing radiation-curable resin with a cyclic structure so that the cyclic structure accounts for 2 to 45% by mass of the entire ionizing radiation-curable resin. The decorative sheets according to Examples 1 to 12 had low gloss, high fingerprint resistance, high stain resistance, high scratch resistance, and high processability.

The decorative sheet according to Comparative Example 1 did not have an uneven structure having a plurality of ridged portions protruding in a ridged pattern in the surface of the surface protection layer. In the decorative sheets according to Comparative Examples 2 and 3, the ionizing radiation-curable resin did not contain an ionizing radiation-curable resin with a cyclic structure. The decorative sheets according to Comparative Examples 1 to 3 all failed to achieve high stain resistance.

[Reference Signs List]

| 1 | Decorative sheet |
| 2 | Primary film layer |
| 3 | Pattern layer |
| 4 | Transparent resin layer |
| 4a | Embossed pattern |
| 4b | Adhesive resin layer |
| 5 | Surface protection layer |
| 5A | Core portion |
| 5B | Ridged portion |
| 6 | Primer layer |
| 11 | Decorative material |
| B | Substrate |

**Claims**

1. A decorative sheet comprising:

   a primary film layer; and
   a surface protection layer provided on one surface of the primary film layer, wherein
   the surface protection layer has a surface provided with an uneven structure having a plurality of ridged portions protruding in a ridged pattern,
   the surface protection layer contains a cured product of an ionizing radiation-curable resin, and
   the ionizing radiation-curable resin contains an ionizing radiation-curable resin with a cyclic structure.

2. The decorative sheet according to claim 1, wherein
   the ionizing radiation-curable resin contains the ionizing radiation-curable resin with a cyclic structure, the cyclic structure accounting for 2 to 45% by mass of the entire ionizing radiation-curable resin.

3. The decorative sheet according to claim 1, wherein
   the cyclic structure is composed of a hydrocarbon having one to four rings.

4. The decorative sheet according to claim 1, wherein
   the ionizing radiation-curable resin with a cyclic structure is an acrylate.

5. The decorative sheet according to claim 1, wherein
   the ionizing radiation-curable resin with a cyclic structure is monofunctional.

6. The decorative sheet according to claim 1, wherein
the ionizing radiation-curable resin further contains an oligomer having ten or less functional groups.

7. The decorative sheet according to claim 6, wherein
the oligomer is a urethane acrylate or acrylic acrylate.

8. The decorative sheet according to claim 1, wherein
the uneven structure of the surface protection layer has RSm/Ra within a range of 10 to 600.

9. The decorative sheet according to claim 1, wherein
the surface protection layer has a thickness within a range of 2 to 20 $\mu$m.

10. The decorative sheet according to claim 1, wherein
the surface protection layer further contains particles having an average particle size of 10 $\mu$m or less.

11. The decorative sheet according to claim 10, wherein
the particles are contained in the surface protection layer in an amount within a range of 0.5 to 10 parts by mass relative to 100 parts by mass of the entire ionizing radiation-curable resin.

12. The decorative sheet according to claim 1, wherein
the surface protection layer has a gloss level smaller than or equal to 10.

13. A decorative material comprising:

   the decorative sheet according to any one of claims 1 to 12; and
   a substrate to which the decorative sheet is bonded.

14. A method for producing a decorative sheet, the method comprising:

   coating one surface of a primary film layer with a coating film made from a surface protection layer coating solution;
   irradiating the coating film with light having a wavelength of 200 nm or less; and
   after the irradiation, irradiating with ionizing radiation or with ultraviolet light having a wavelength longer than the light, wherein
   the surface protection layer coating solution contains an ionizing radiation-curable resin, and the ionizing radiation-curable resin contains an ionizing radiation-curable resin with a cyclic structure.

15. The method according to claim 14, wherein
the light has a wavelength of 172 nm.

# FIG.1

# FIG.2

# FIG.3

# FIG.4

## INTERNATIONAL SEARCH REPORT

| International application No. |
|---|
| **PCT/JP2024/025339** |

**A. CLASSIFICATION OF SUBJECT MATTER**

*B32B 27/00*(2006.01)i; *B32B 3/30*(2006.01)i; *B32B 27/16*(2006.01)i; *B32B 27/30*(2006.01)i; *E04F 13/07*(2006.01)i; *E04F 13/18*(2006.01)i

FI: B32B27/00 E; B32B3/30; B32B27/16 101; B32B27/30 A; E04F13/07 B; E04F13/07 C; E04F13/18 A

According to International Patent Classification (IPC) or to both national classification and IPC

**B. FIELDS SEARCHED**

Minimum documentation searched (classification system followed by classification symbols)

B32B27/00; B32B3/30; B32B27/16; B32B27/30; E04F13/07; E04F13/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2022-53192 A (DAI NIPPON PRINTING CO., LTD.) 05 April 2022 (2022-04-05) claims 1, 4, paragraphs [0040]-[0050] | 1-15 |
| Y | JP 2022-102877 A (TOPPAN PRINTING CO., LTD.) 07 July 2022 (2022-07-07) claim 1, paragraph [0021] | 1-3, 5-15 |
| A | | 4 |
| Y | JP 2019-155777 A (TOPPAN PRINTING CO., LTD.) 19 September 2019 (2019-09-19) claims 1, 6, paragraphs [0017]-[0019], [0034]-[0038], examples 1-2 | 1-15 |
| Y | WO 2022/145137 A1 (TOPPAN PRINTING CO., LTD.) 07 July 2022 (2022-07-07) paragraphs [0008]-[0010], [0023], [0026]-[0032], [0045], [0048] | 1-15 |
| A | JP 2022-187117 A (NIPPON PAPER INDUSTRIES CO., LTD.) 19 December 2022 (2022-12-19) claims | 1-15 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 September 2024** | **08 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
**Information on patent family members**

International application No.

**PCT/JP2024/025339**

| Patent document cited in search report | | | Publication date (day/month/year) | Patent family member(s) | Publication date (day/month/year) |
|---|---|---|---|---|---|
| JP | 2022-53192 | A | 05 April 2022 | (Family: none) | |
| JP | 2022-102877 | A | 07 July 2022 | (Family: none) | |
| JP | 2019-155777 | A | 19 September 2019 | (Family: none) | |
| WO | 2022/145137 | A1 | 07 July 2022 | US 2023/0025597 A1 paragraphs [0012]-[0014], [0044], [0051]-[0061], [0082], [0086] EP 4101640 A1 CN 115243889 A KR 10-2023-0127867 A | |
| JP | 2022-187117 | A | 19 December 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3271022 B
- JP 2019119138 A
- WO 2021201105 A
- JP 2022008024 A
- WO 2022054644 A
- WO 2022054645 A
- WO 2022054646 A